# EUROPEAN PATENT SPECIFICATION

(11) **EP 3 414 927 B1**
(45) Date of publication and mention of the grant of the patent: **24.06.2020**
(21) Application number: 16706001.1
(22) Date of filing: 12.02.2016
(51) Int. Cl.: H04W 12/04, H04W 12/06

(54) **SECURING AN INTERFACE AND A PROCESS FOR ESTABLISHING A SECURE COMMUNICATION LINK**
BEFESTIGUNG EINER SCHNITTSTELLE UND VERFAHREN ZUR HERSTELLUNG EINER SICHEREN KOMMUNIKATIONSVERBINDUNG
SÉCURISATION D'UNE INTERFACE ET PROCÉDÉ POUR ÉTABLIR UNE LIAISON DE COMMUNICATION SÉCURISÉE

(43) Date of publication of application: 19.12.2018
(73) Proprietor: Telefonaktiebolaget LM Ericsson (PUBL), 164 83 Stockholm (SE)
(72) Inventor: TANONI, Gustavo, St-Lambert, Québec J4S 1J3 (CA)
(74) Representative: Ericsson
(86) International application number: PCT/IB2016/050770
(87) International publication number: WO 2017/137809

(56) References cited:
- EP-A1- 1 811 744
- WO-A1-2010/095988
- ERICSSON: "Comments on S3-142418: PC3 security using HTTPDigestAKAv2 and TLS-PSK", 3GPP DRAFT; S3-142543, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. San Fransisco, USA; 20141117 - 20141121 17 November 2014 (2014-11-17), XP050881586, Retrieved from the Internet: URL:http://www.3gpp.org/ftp/Meetings_3GPP_ SYNC/SA3/Docs/ [retrieved on 2014-11-17]

## Description

### TECHNICAL FIELD

The present disclosure relates to securing an interface and a process for establishing a secure communication link between network entities.

### BACKGROUND

General Bootstrapping Architecture (GBA) is standardized and described in document 3GPP TS 33.220 V12.3.0 (2014-06) entitled "3rd Generation Partnership Project; Technical Specification Group Services and System Aspects; Generic Authentication Architecture (GAA); Generic Bootstrapping Architecture (GBA)".

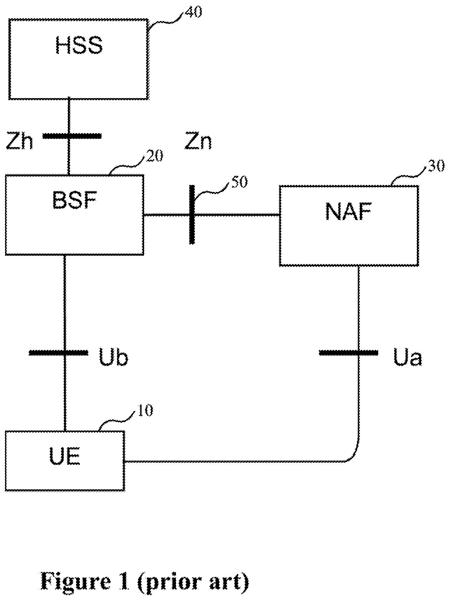

Figure 1 illustrates the basic elements of GBA, which is a technology that enables authentication of a user.

The User Equipment (UE) 10 is connected to the Bootstrapping Server Function (BSF) 20 through the Ub interface. The UE is also connected to the Network Application Function (NAF) through the Ua interface. The NAF 30 is connected to the BSF 20 through the Zn interface 50. Finally, the BSF 20 is connected to the Home Subscriber Server (HSS) 40 through the Zh interface. The above mentioned standard document explains in more details the bootstrapping (which is another name for an authentication procedure) architecture and requirements on each interface Ub, Ua, Zh and Zn (which are called reference points in the standard document).

Historically, the Network Application Function (NAF) and the Bootstrapping Server Function (BSF) were both located in a secure zone, also called militarized zone, of, for example, an operator's network and could communicate without major security issues over the Zn interface. The NAF and BSF were securing the Zn interface using asymmetric encryption through the installation and use of certificates, i.e. private and public keys in the NAF and the BSF, respectively.

Nowadays, however, with the advent of the Internet of Things (IoT), the NAF is pulled out of the secure zone and brought into an enterprise network, for example, thus exposing the Zn interface to an untrusted network.

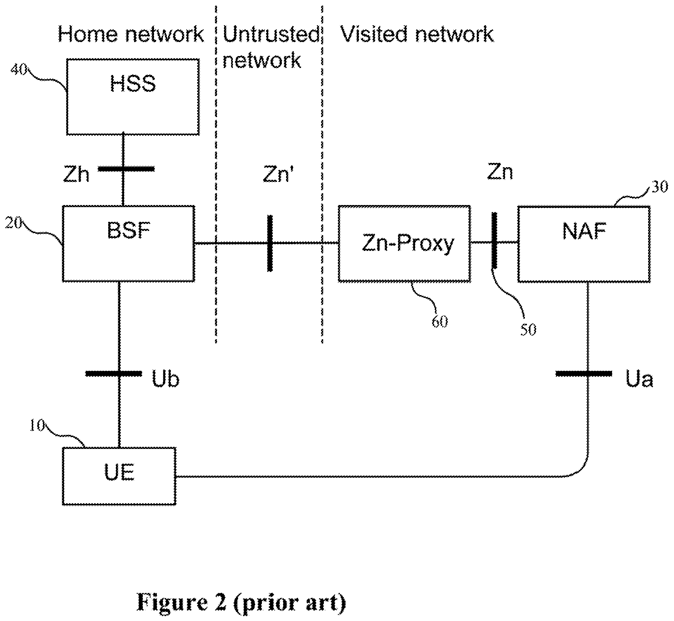

The solution illustrated in Figure 2, has been proposed which use a Zn-Proxy 60 to communicate with the BSF 20 through an untrusted network. This solution, however, adds a node to the visited network and cannot be easily scaled.

Patent application EP 1 811 744 A1 discloses a method for authenticating applied to a system including a first service entity requesting a service, a second service entity providing the service and an entity authentication centre, EAC. The method includes respectively performing a mutual authentication between the first service entity and the EAC and between the second service entity and the EAC according to the negotiated authentication mode. If the first service entity requests the second service entity to provide the service, the EAC provides authentication inquiring for the first service entity and the second service entity according to the negotiated authentication mode, and generates a shared derived key according to the negotiated authentication mode. The first service entity and the second service entity authenticate each other according to the shared derived key and the negotiated authentication mode.

Patent application WO 2010/095988 A1 discloses a method of authenticating access to a service which comprises: a) receiving at a mobile terminal, over a bi-directional near-field communication channel between the mobile terminal and a browser, at least part of the identifier of a service; b) comparing, at the mobile terminal, at least part of the identifier received at the mobile terminal with a set of identifiers stored in the mobile device; and c) authenticating access to the service on the basis of whether at least part of the identifier received at the mobile terminal matches an identifier in the set.

Non-patent literature Ericsson: ""Comments on S3-142418: PC3 security using HTTPDigestAKAv2 and TLS-PSK", 3GPP draft, S3-142543, SA WG3, November 2014 discloses mechanisms to secure the PC3 interface between the UE and the ProSe Function with the TLS-PSK protocol.

### SUMMARY

There is therefore a need for another type of solution.

According to aspects of the present disclosure, methods, nodes and media are provided according to the independent claims. Preferred embodiments are recited in the dependent claims.

### BRIEF DESCRIPTION OF THE DRAWINGS

Figure 1 is a schematic illustration of General Bootstrapping Architecture (GBA) according to the prior art.
Figure 2 is a schematic illustration of a modified GBA according to the prior art.
Figure 3 is a schematic illustration of GBA according to an embodiment.
Figure 4 is a diagram illustrating message exchanges according to an embodiment.
Figure 5 is a flowchart of a method executable by an Application Function according to an embodiment.
Figure 6 is a flowchart of a method executable by an Authentication Function according to an embodiment.
Figures 7 and 9 illustrate Application Function nodes according to some embodiments.
Figures 8 and 10 illustrate Authentication Function nodes according to some embodiments.
Figures 11-12 are schematic illustrations of a cloud environment in which embodiments can be deployed.
Figures 13 and 14 are flowcharts of methods according to some embodiments.
Figure 15 is a schematic illustration of an example according to an embodiment.

### DETAILED DESCRIPTION

Various features and embodiments will now be described with reference to the figures to fully convey the scope of the disclosure to those skilled in the art.

Many aspects will be described in terms of sequences of actions or functions. It should be recognized that in some embodiments, some functions or actions could be performed by specialized circuits, by program instructions being executed by one or more processors, or by a combination of both.

Further, some embodiments can be partially or completely embodied in the form of computer-readable carrier or carrier wave containing an appropriate set of computer instructions that would cause processing circuit to carry out the techniques described herein.

In some alternate embodiments, the functions/actions may occur out of the order noted in the sequence of actions. Furthermore, in some illustrations, some blocks, functions or actions may be optional and may or may not be executed.

In current General Bootstrapping Architecture (GBA), for cases where the Network Application Function (NAF) is not located in a secure zone, also called militarized zone, with the Bootstrapping Server Function (BSF), Transport Layer Security (TLS) is defined as a secure method of transport for the Zn interface, which is also called the Zn reference point. This TLS connection on the Zn interface can currently be accomplished only with the use of asymmetric encryption through the installation and use of certificates, i.e. private and public keys in the Application Function, e.g. the NAF, and in the Authentication Function, e.g. the BSF, respectively.

In asymmetric encryption, a key pair is used. A public key is made public and available to other entities. A second, private key is kept secret. Any message that is encrypted by using a public key can only be decrypted by applying the same algorithm with the corresponding private key. Conversely, a message that is encrypted by using the private key can only be decrypted by using the corresponding public key.

Asymmetric encryption has several disadvantages, especially in the context of the Internet of Things (IoT). First, it is slower than symmetric encryption (which will be described further below). Asymmetric encryption requires more processing power to both encrypt and decrypt the content of the message.

Second, using asymmetric encryption is limiting in the sense that Public Key Infrastructure (PKI) systems and certificates have to be used. Using PKI and certificates requires that a Certificate Authority validate the certificates. In the case of IoT, where there will be millions and eventually billions of connected devices, the certificate solution will suffer from scaling problems when a large amount of communication links has to be secured using TLS.

Symmetric encryption is therefore a more flexible and expandable solution for establishing Transport Layer Security (TLS). Symmetric encryption is based on a shared secret, i.e. a secret key, which can be a number, a word, or just a string of random letters that is shared and applied on both ends to encrypt and decrypt messages.

Embodiments described herein provide a solution for provisioning network nodes with a shared secret in a secure manner and for establishing a secure communication link on an interface between two network nodes using the shared secret.

In one embodiment, a method is defined for an Application Function, e.g. a NAF, located in an unsecure zone, to perform a bootstrapping procedure with an Authentication Function, e.g. a BSF. This method is proposed as a way to secure a new interface, called Znb, between the NAF and BSF. Once the bootstrapping is accomplished, the NAF and BSF have a pre-shared key (PSK) which can be used to perform a TLS-PSK cipher, thus creating a secure channel, without the need of public/private certificates. Further, TLS-PSK is based on time-limited session keys from the GBA bootstrapping method and is more secured than TLS-PKI (which is based on certificates).

In order to overcome some of the described problems, in the embodiments described below, the Application function, e.g. the NAF, may be provisioned with a Subscriber Identity Module (SIM) or alternatively with software SIM credentials (which is the software equivalent to the physical SIM). These credentials can be used during the bootstrapping to generate a GBA session key. The GBA session key can then be used by the NAF to create a TLS-PSK tunnel with the Authentication Function, e.g. the BSF.

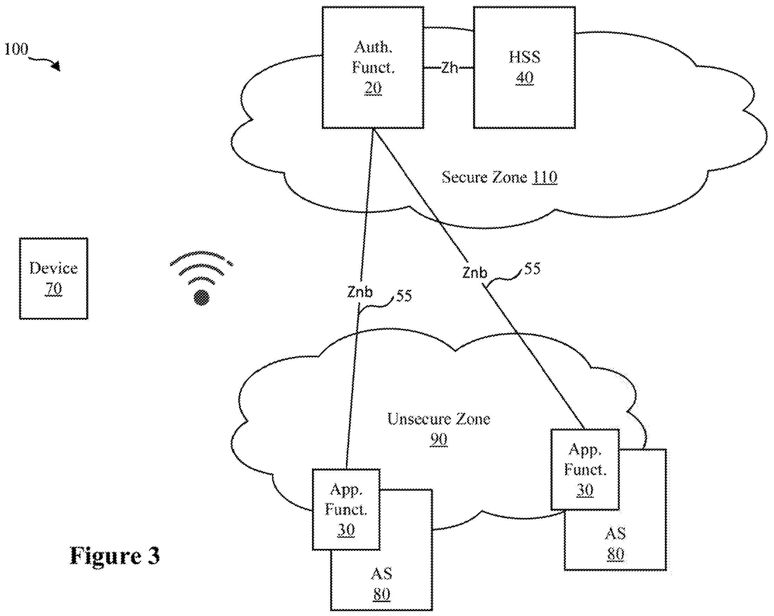

Figure 3 illustrates a system 100 comprising a Device 70, which can be a User Equipment (UE), a Machine-to-Machine (M2M) device, any type of connected computing device or any type of sensor device that needs to transmit and/or receive data. The system 100 comprises a secure zone 110, also called militarized zone, in which the Authentication Function 20 and the HSS 40 are located. The Authentication Function 20 and the HSS 40 can typically communicate securely in the secure zone. It should be noted, however, that in some embodiments, the Authentication Function 20 and the HSS 40 could, either or both, be located outside the secure zone 110, e.g. in the cloud. For example, these nodes 20, 40 could run in a data center providing a pool of configurable computer resources. In such a case, a method similar to the one presented herein could be used for securing the communication between these nodes. The system 100 also comprises an unsecure zone 90, in which the Application Function 30 and the Application Server 80 are located, and in which they can communicate with each other. Theses nodes are typically, but not necessarily, owned by the same entity. The system 100 includes the new Znb interface 55, which will be details further below.

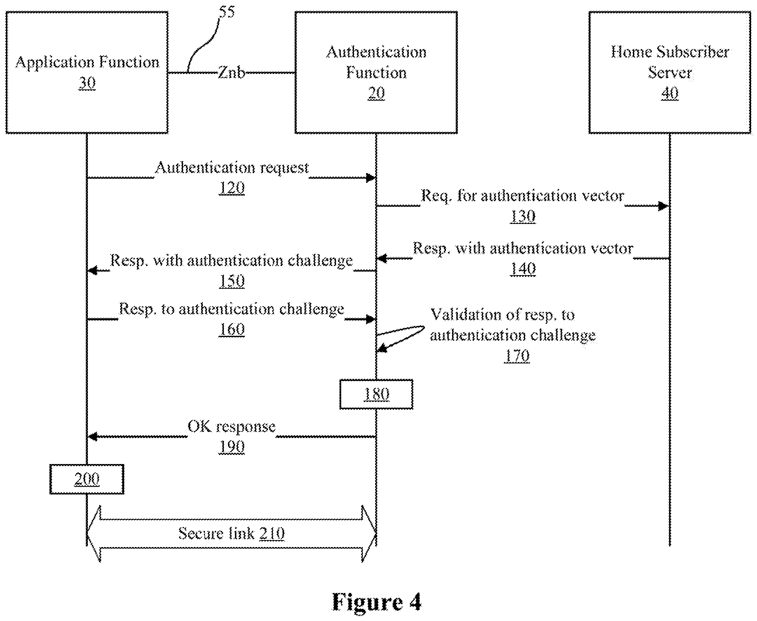

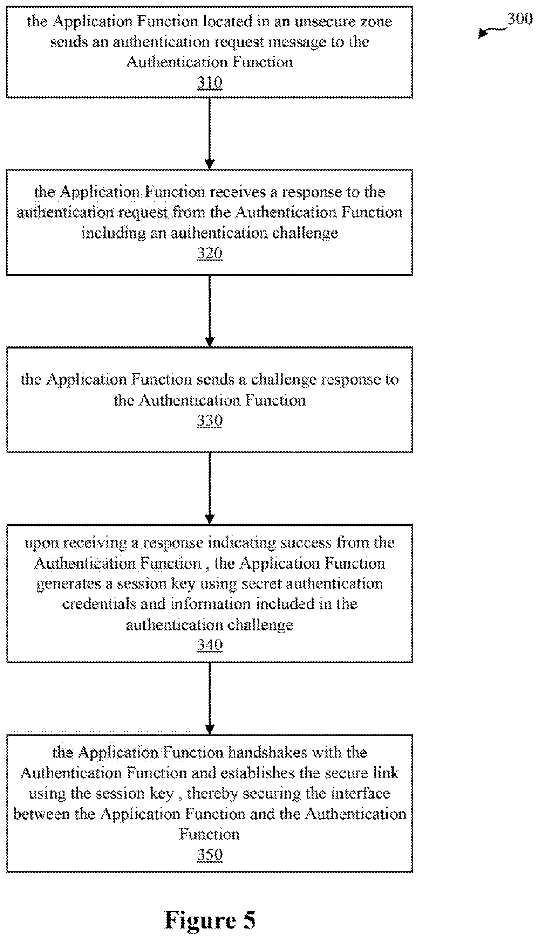

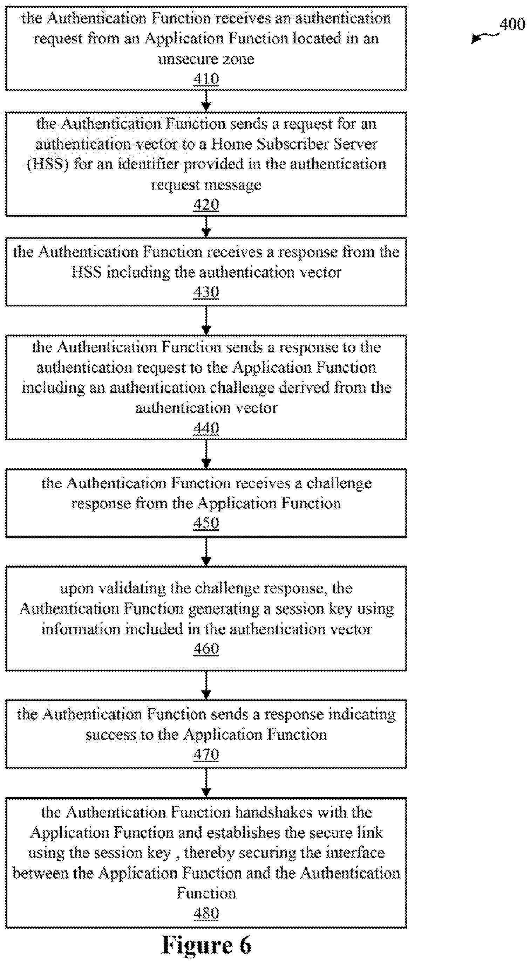

Figure 4 illustrates messages exchanged between the Application Function 30, located in an unsecure zone, the Authentication Function 20 and the HSS 40. The messages exchanged between these nodes will be further described in relation to the methods of Figures 5 and 6.

Figure 5 illustrates a method 300 for securing an interface and for securing a process for establishing a secure communication link between an Application Function 30 located in an unsecure zone and an Authentication Function 20. The method 300 comprises step 310 in which the Application Function 30 sends an authentication request message 120 to the Authentication Function 20. The method 300 comprises step 320 in which the Application Function 30 receives a response to the authentication request 150 from the Authentication Function including an authentication challenge. The method 300 comprises step 330 in which the Application Function 30 sends a challenge response 160 to the Authentication Function 20. The method 300 comprises step 340 in which, upon receiving a response indicating success 190 from the Authentication Function 20, the Application Function 30 generates a session key 200 using secret authentication credentials and information included in the authentication challenge (not illustrated). The method 300 comprises step 350 in which the Application Function 30 handshakes with the Authentication Function 20 and establishes the secure communication link 210 using the session key 200, thereby securing the interface 55 between the Application Function 30 and the Authentication Function 20.

As explained above, the Application Function may be a Network Application Function (NAF) 30 and the Authentication Function may be a Bootstrapping Server Functionality (BSF) 20 as defined in Generic Bootstrapping Architecture (GBA).

The interface 55 may be called a Znb interface or reference point between the NAF 30 and the BSF 20. However the actual "Znb" name could differ, as long as the method for securing the interface and for securing the process for establishing the secure communication link is the same.

In the method 300, the authentication challenge may be an authentication vector generated by a Home Subscriber Server (HSS) 40 and the session keys may be Bootstrapping Key Session (Ksb) useable for a specific Application Function 30. This means that the Ksb can be used for securing a link between the Authentication Function 20 and only one Application Function 30. The information included in the authentication challenge can include a Message Authentication Code (MAC) and Random number (RAND), for example.

The secret authentication credentials that are stored in the Application Function 30 may comprise a physical Subscriber Identity Module (SIM), an embedded SIM or a software SIM. A person skilled in the art would know that other variations of hardware or software authentication credentials, having security levels similar to that of a SIM card, could also be used interchangeably.

In the method 300, the secure communication link may be a Transport Layer Security based on Pre-Shared Key ciphersuite (TLS-PSK) tunnel.

Figure 6 illustrates a method 400 for securing an interface and for securing a process for establishing a secure communication link between an Application Function 30 located in an unsecure zone and an Authentication Function 20. The method 400 comprises step 410 in which the Authentication Function 20 receives an authentication request message 120 from the Application Function 30. The method 400 comprises step 420 in which the Authentication Function 20 sends a request for an authentication vector 130 to a Home Subscriber Server (HSS) 40 for an identifier provided in the authentication request message 120. The method 400 comprises step 430 in which the Authentication Function 20 receives a response 140 from the HSS 40 including the authentication vector. The method 400 comprises step 440 in which the Authentication Function 20 sends a response to the authentication request 150 to the Application Function 30 including an authentication challenge derived from the authentication vector. The method 400 comprises step 450 in which the Authentication Function 20 receives a challenge response 160 from the Application Function 30. The method 400 comprises step 460 in which upon validating the challenge response 170, the Authentication Function 20 generates a session key 180 using information included in the authentication vector. The method 400 comprises step 470 in which the Authentication Function 20 sends a response indicating success 190 to the Application Function 30. The method 400 comprises step 480 in which the Authentication Function 20 handshakes with the Application Function 30 and establishes the secure communication link 210 using the session key 180, thereby securing the interface between the Application Function 30 and the Authentication Function 20.

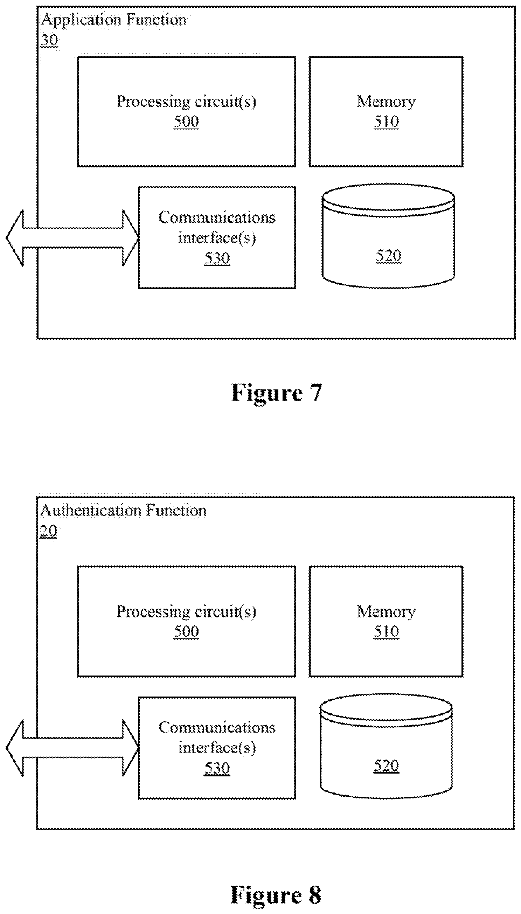

Figure 7 illustrates an Application Function 30 node located in an unsecure zone for securing an interface and a process for establishing a secure communication link towards an Authentication Function 20, as described previously. The Application Function node 30 comprises a processor or processing circuit 500 and a memory 510, 520, the memory 510 is a transitory memory and the memory 520 is a non-transitory memory, the memory 510, 520 contains instructions executable by the processing circuit 500 whereby the Application Function 30 node is operative to execute a method 300 as described previously in relation to figure 5. The Application Function 30 node further comprises at least one communications interface 530 to be able to communicate with a network or with other nodes as would be apparent to a person skilled in the art.

Figure 8 illustrates an Authentication Function node 20 for securing an interface and a process for establishing a secure communication link towards an Application Function 30 located in an unsecure zone, as described previously. The Authentication function 20 node comprises a processor or processing circuit 500 and a memory 510, 520, the memory 510 is a transitory memory and the memory 520 is a non-transitory memory, the memory 510, 520 containing instructions executable by the processing circuit 500 whereby the Authentication Function 20 node is operative to execute a method 400 as described previously in relation to figure 6. The Authentication Function node 20 further comprises at least one communications interface 530 to be able to communicate with a network or with other nodes as would be apparent to a person skilled in the art.

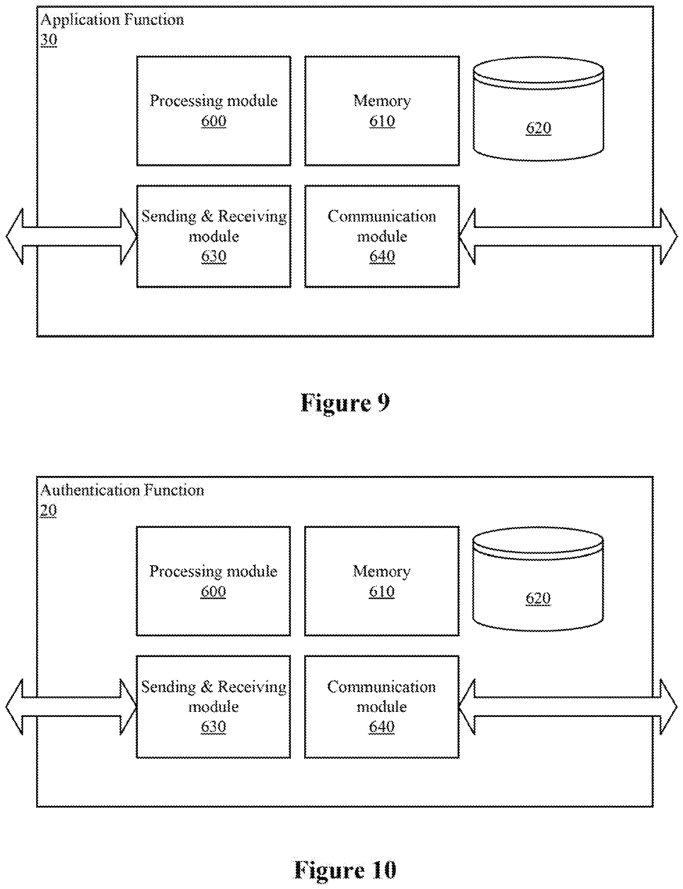

Figure 9 illustrates an Application Function node 30 located in an unsecure zone for securing an interface and a process for establishing a secure communication link towards an Authentication Function 20. The Application Function node 30 comprises a sending module 630 for sending an authentication request message 120 to the Authentication Function 20. The Application Function node 30 comprises a receiving module 630 for receiving a response to the authentication request 150 from the Authentication Function 20 including an authentication challenge. The sending and the receiving modules 630 could alternatively be separate modules. The sending module 630 is further for sending a challenge response 160 to the Authentication Function 20. The receiving module 630 is further for receiving a response indicating success 190 from the Authentication Function 20. The Application Function node 30 comprises a processing module 600 for generating a session key using secret authentication credentials and information included in the authentication challenge, upon receiving the response indicating success 190. The Application Function node 30 comprises a communication module 640 for handshaking with the Authentication Function 20 and establishing the secure communication link 210 using the session key, thereby securing the interface between the Application Function node 30 and the Authentication Function 20. The Application Function node 30 also comprises at least one memory module 610, 620, the memory module 610 is a transitory memory and the memory 620 is a non-transitory memory, the memory module 610, 620 containing instructions executable by the processing module. The Application Function node 30 is operative to execute a method 300 as described previously in relation to figure 5.

Figure 10 illustrates an Authentication Function node 20 for securing an interface and a process for establishing a secure communication link towards an Application Function 30 located in an unsecure zone. The Authentication Function node 20 comprises a receiving module 630 for receiving an authentication request message 120 from the Application Function. The Authentication Function node 20 comprises a sending module 630 for sending a request for an authentication vector 130 to a Home Subscriber Server (HSS) 40 for an identifier provided in the authentication request message 120. The sending and the receiving modules 630 could alternatively be separate modules. The receiving module 630 is further for receiving a response 140 from the HSS including the authentication vector. The sending module 630 is further for sending a response 150 to the authentication request to the Application Function 30 including an authentication challenge derived from the authentication vector. The receiving module 630 is further for receiving a challenge response 160 from the Application Function 30. The Authentication Function node 20 comprises a processing module 600 for generating a session key 180 using information included in the authentication vector, upon validating 170 the challenge response. The sending module 630 is further for sending a response indicating success 190 to the Application Function 30. The Authentication Function node 20 comprises a communication module 640 for handshaking with the Application Function 30 and establishing the secure communication link 210 using the session key, thereby securing the interface between the Application Function 30 and the Authentication Function node 20. The Authentication Function node 20 also comprises at least one memory module 610, 620, the memory module 610 is a transitory memory and the memory 620 is a non-transitory memory, the memory module 610, 620 containing instructions executable by the processing module. The Authentication Function node 20 is operative to execute a method 400 as described previously in relation to figure 6.

Although all of the details of the Application Function node 30 and Authentication Function node 20 of figures 7 to 10 are not illustrated, these nodes 20, 30 comprise one or several general-purpose or special-purpose processors 500, 600 or other microcontrollers programmed with suitable software programming instructions and/or firmware to carry out some or all of the functionality of the nodes 20, 30 described herein. In addition, or alternatively, the nodes 20, 30 may comprise various digital hardware blocks (e.g., one or more Application Specific Integrated Circuits (ASICs), one or more off-the-shelf digital or analog hardware components, or a combination thereof) (not illustrated) configured to carry out some or all of the functionality of the controller nodes 20, 30 described herein. A memory 510, 610, such as a random access memory (RAM), may be used by the processor, or processing circuit, 500, 600 to store data and programming instructions which, when executed by the processor 500, 600, implement all or part of the functionality described herein. The nodes 20, 30 may also include one or more storage media 520, 620 for storing data necessary and/or suitable for implementing the functionality described herein, as well as for storing the programming instructions which, when executed on the processor 500, 600, implement all or part of the functionality described herein. One embodiment of the present disclosure may be implemented as a computer program product that is stored on a computer-readable storage medium, the computer program product including programming instructions that are configured to cause the processor 500, 600 to carry out the steps described herein.

Referring back to figures 7 and 9, there are provided a non-transitory computer media 520, 620 having stored thereon instructions for securing an interface and for securing a process for establishing a secure communication link between an Application Function 30 and an Authentication Function 20. The instructions comprise steps of a method 300 as previously described in relation to figure 5.

Referring back to figures 8 and 10, there are provided non-transitory computer media 520, 620 having stored thereon instructions for securing an interface and for securing a process for establishing a secure communication link between an Application Function 30 and an Authentication Function 20. The instructions comprise steps of a method 400 as previously described in relation to figure 6.

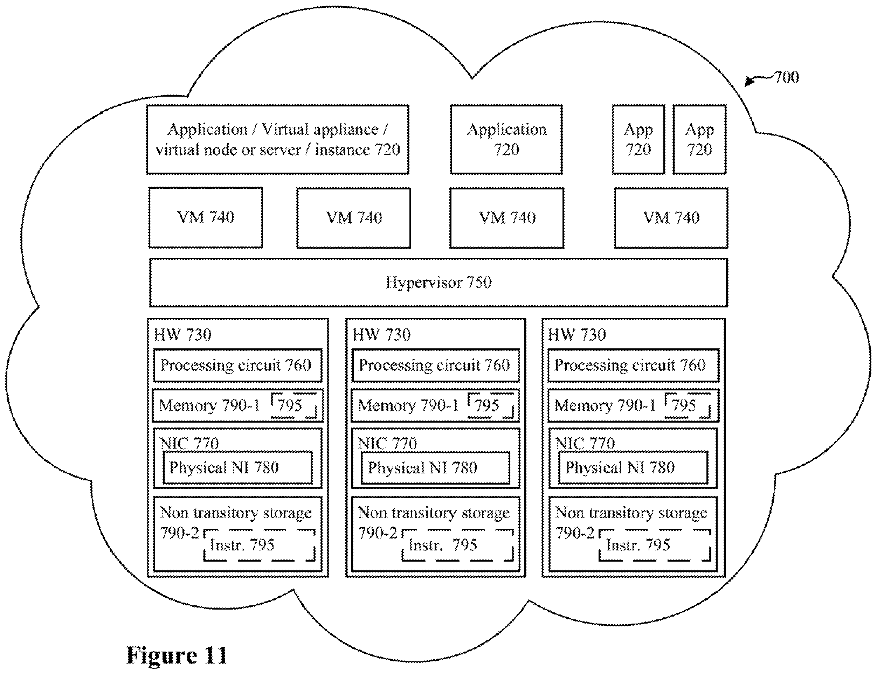

Referring to figure 11, there is provided an Application Function instance 720, located in an unsecure zone in a cloud computing environment 700 which provides processing circuit 760 and memory 790 for running the Application Function instance 720. The memory 790 contains instructions 795 executable by said processing circuit 760 whereby the Application Function instance 720 is operative to execute the method 300 as previously described in relation to figure 5.

The cloud computing environment 700, comprises a general-purpose network device including hardware 730 comprising a set of one or more processor(s) or processing circuit 760, which can be commercial off-the-shelf (COTS) processors, dedicated Application Specific Integrated Circuits (ASICs), or any other type of processing circuit including digital or analog hardware components or special purpose processors, and network interface controller(s) 770 (NICs), also known as network interface cards, which include physical Network Interface 780. The general-purpose network device also includes non-transitory machine readable storage media 790-2 having stored therein software 795 and/or instructions executable by the processor 760. During operation, the processor(s) 760 execute the software 795 to instantiate a hypervisor 750, sometimes referred to as a virtual machine monitor (VMM), and one or more virtual machines 740 that are run by the hypervisor 750. A virtual machine 740 is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes. Each of the virtual machines 740, and that part of the hardware 730 that executes that virtual machine, be it hardware dedicated to that virtual machine and/or time slices of hardware temporally shared by that virtual machine with others of the virtual machine(s) 740, forms a separate virtual network element(s) (VNE).

The hypervisor 750 may present a virtual operating platform that appears like networking hardware to virtual machine 740, and the virtual machine 740 may be used to implement functionality such as control communication and configuration module(s) and forwarding table(s), this virtualization of the hardware is sometimes referred to as network function virtualization (NFV). Thus, NFV may be used to consolidate many network equipment types onto industry standard high volume server hardware, physical switches, and physical storage, which can be located in Data centers, and customer premise equipment (CPE). Different embodiments of the Application Function 30 and Authentication Function 20 instances may be implemented on one or more of the virtual machine(s) 740, and the implementations may be made differently.

Still referring to figure 11, there is provided an Authentication Function instance 720, in a cloud computing environment 700 which provides processing circuit 760 and memory 790 for running the Authentication Function instance 720. The memory 790 contains instructions 795 executable by the processing circuit 760 whereby the Authentication Function instance 720 is operative to execute the method 400 as previously described in relation to figure 6.

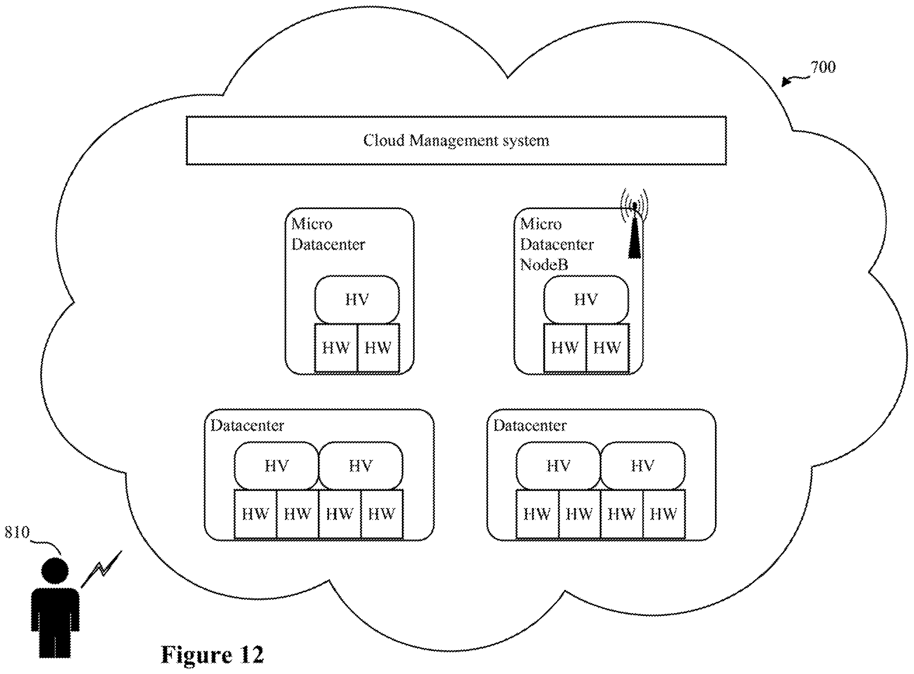

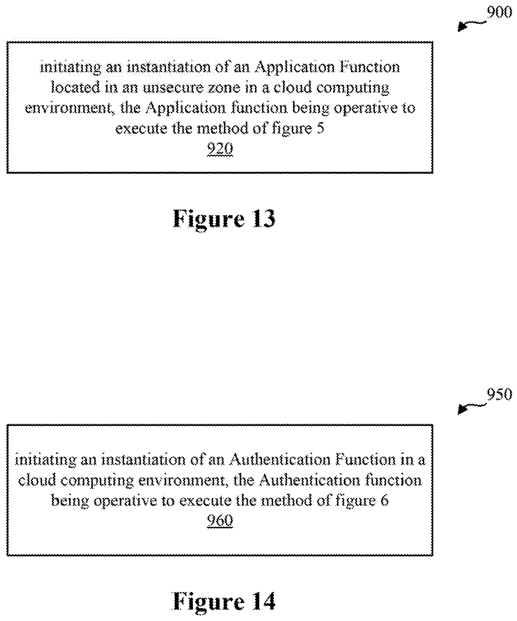

Referring to figures 12 and 13 there is provided a method 900 comprising the step 920 of initiating, by a user 810, an instantiation of an Application Function located in an unsecure zone in a cloud computing environment 800 which provides processing circuit and memory for running the Application Function, the Application function being operative to execute the method 300 as previously described in relation to figure 5.

Still referring to figure 12 and referring to figure 14, there is provided a method 950 comprising the step 960 of initiating, by a user 810, an instantiation of an Authentication Function in a cloud computing environment 800 which provides processing circuit and memory for running the Authentication Function, the Authentication function being operative to execute the method 400 as previously described in relation to figure 6.

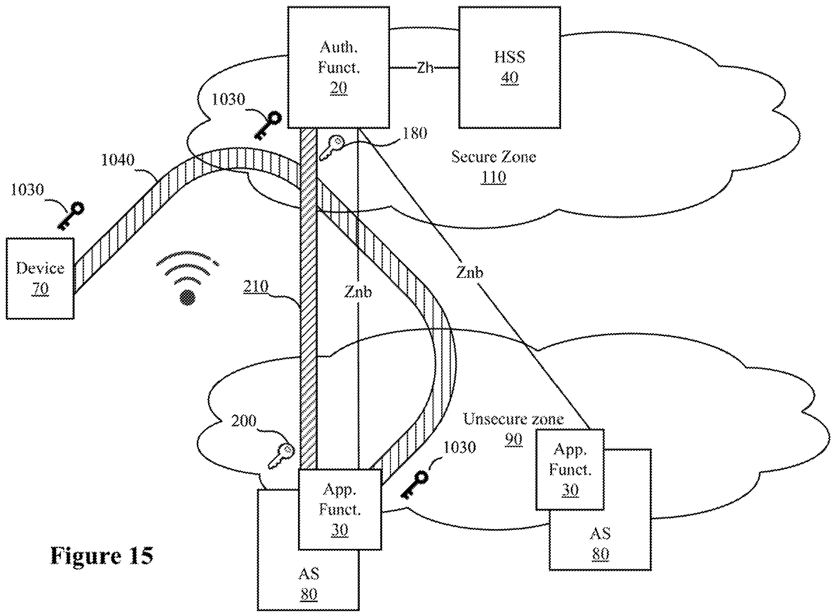

Figure 15 illustrates an example embodiment comprising a device 70, which can be, but is not limited to, a standalone device such as a sensor, a smart meter, a connected car, a medical device, a user equipment, a watch, a headset, glasses, a home appliance, etc. The device 70 may also be a plurality of devices, such as, but not limited to, an electrical grid, a network of connected devices, such as sensors, cameras, microphones, computing devices, cars, trucks, bus, trains, planes, bicycles, vending machines, industrial machinery, public utilities, smart buildings, meters, fixtures (light, heat, cooling), advertisement displays, etc.

The HSS 40 is provisioned with secret authentication credentials pertaining to each Application Function 30 located in an unsecure zone. The same authentication credentials are also provisioned in the Application Functions 30. This step can be done offline (e.g. by inserting a physical SIM) or online (by provisioning the Application Function 30 with a software SIM, for example, as explained previously). This step has to be done in a secure manner, as would be apparent to a person skilled in the art.

When an Application Function 30 is ready to authenticate with the Authentication Function 20, it performs the self-bootstrapping method 300, based on a shared secret, as explained previously in relation to figure 5. A key derivation procedure can be used by the Authentication Function 20 to generate the session keys 180, 200 for a specific Application Function 30. A secure TLS PSK communication tunnel 210 is then established between the Application function 30 and the Authentication function 20, using the session keys 180, 200.

Then, the device 70 and the Authentication Function 20 can mutually authenticate using the second generation (2G) Authentication and Key Agreement (AKA) protocol (as described in the standard document referred to in the background section), and agree on session keys 1030 that are afterwards applied between the device 70 and a specific Application Function 30. A TLS PSK communication tunnel 1040 can then also be established between the device 70 and the Application Function 30, using the session keys 1030.

After the bootstrapping has been completed, the device 70 and Application Function 30 can run some application-specific protocol where the authentication of messages are based on the session keys 1030 generated during the mutual authentication between device 70 and Application Function 30. The device 70, the Application Function 30 and the Application Server 80 can then communicate securely.

Modifications and other embodiments will come to mind to one skilled in the art having the benefit of the teachings presented in the foregoing description and the associated drawings. Therefore, it is to be understood that modifications and other embodiments, such as specific forms other than those of the embodiments described above, are intended to be included within the scope of this disclosure. The described embodiments are merely illustrative and should not be considered restrictive in any way. The scope sought is given by the appended claims, rather than the preceding description, and all variations and equivalents that fall within the range of the claims are intended to be embraced therein. Although specific terms may be employed herein, they are used in a generic and descriptive sense only and not for purposes of limitations.

## Claims

1. A method for securing an interface (55) and for securing a process for establishing a secure communication link between a first Application Function (30) located in an unsecure zone and a second Authentication Function (20), comprising:
- the first Application Function (30) sending (310) an authentication request message to the second Authentication Function (20);
- the first Application Function (30) receiving (320) a response to the authentication request from the second Authentication Function (20) including an authentication challenge;
- the first Application Function (30) sending (330) a challenge response to the second Authentication Function (20);
- upon receiving a response indicating success from the second Authentication Function (20), the first Application Function (30) generating (340) a session key using secret authentication credentials and information included in the authentication challenge; and
- the first Application Function (30) handshaking (350) with the second Authentication Function (20) and establishing the secure communication link using the session key, thereby securing the interface (50) between the first Application Function (30) and the second Authentication Function (20),
wherein the first Application Function (30) is a Network Application Function, NAF, and the second Authentication Function (20) is a Bootstrapping Server Functionality, BSF, as defined in Generic Bootstrapping Architecture, GBA.

2. The method of claim 1, wherein the interface (55) is an interface between the NAF and the BSF, and/or
wherein the authentication challenge is an authentication vector generated by a Home Subscriber Server, HSS, (40).

3. The method of claim 1 or 2, wherein the session keys are Bootstrapping Key Session, Ksb, useable for a specific Application Function (30), and/or
wherein the secret authentication credentials comprise a physical Subscriber Identity Module, SIM, an embedded SIM or a software SIM.

4. The method of any one of claims 1-3, wherein the information included in the authentication challenge includes a Message Authentication Code, MAC, and Random number, RAND, and/or
wherein the secure communication link is a Transport Layer Security based on Pre-Shared Key ciphersuite, TLS-PSK, tunnel.

5. A method for securing an interface (55) and for securing a process for establishing a secure communication link between a first Application Function (30) located in an unsecure zone and a second Authentication Function (20), comprising:
- the second Authentication Function (20) receiving (410) an authentication request message from the , first Application Function (30);
- the second Authentication Function (20) sending (420) a request for an authentication vector to a Home Subscriber Server, HSS, (40) for an identifier provided in the authentication request message;
- the second Authentication Function (20) receiving (430) a response from the HSS (40) including the authentication vector;
- the second Authentication Function (20) sending (440) a response to the authentication request to the first Application Function (30) including an authentication challenge derived from the authentication vector;
- the second Authentication Function (20) receiving (450) a challenge response from the first Application Function (30);
- upon validating the challenge response, the second Authentication Function (20) generating (460) a session key using information included in the authentication vector;
- the second Authentication Function (20) sending (470) a response indicating success to the first Application Function (30); and
- the second Authentication Function (20) handshaking (480) with the first Application Function (30) and establishing the secure communication link using the session key, thereby securing the interface (55) between the first Application Function (30) and the second Authentication Function (20),
wherein the first Application Function (30) is a Network Application Function, NAF, and the second Authentication Function (20) is a Bootstrapping Server Functionality, BSF, as defined in Generic Bootstrapping Architecture, GBA.

6. The method of claim 5, wherein the interface (55) is an interface between the NAF and the BSF, and/or
wherein the session keys are Bootstrapping Key Session, Ksb, useable for a specific Application Function (30).

7. The method of any one of claims 5 or 6, wherein the information included in the authentication challenge includes a Message Authentication Code, MAC, and Random number, RAND, and/or
wherein the secure communication link is a Transport Layer Security based on Pre-Shared Key ciphersuite, TLS-PSK, tunnel.

8. An Application Function (30) node located in an unsecure zone for securing an interface (55) and a process for establishing a secure communication link towards a second Authentication Function (20), the Application Function (30) node comprising a processing circuit (500) and a memory (510), said memory (510) containing instructions executable by said processing circuit (500) whereby said Application Function (30) node is operative to:
- send (310) an authentication request message to the second Authentication Function (20);
- receive (320) a response to the authentication request from the second Authentication Function (20) including an authentication challenge;
- send (330) a challenge response to the second Authentication Function (20);
- upon receiving a response indicating success from the second Authentication Function (20), generate (340) a session key using secret authentication credentials and information included in the authentication challenge; and
- handshake (350) with the second Authentication Function (20) and establish the secure communication link using the session key, thereby securing the interface (55) between the Application Function (30) and the Authentication Function (20),
wherein the Application Function (30) node is a Network Application Function, NAF, and the second Authentication Function (20) is a Bootstrapping Server Functionality, BSF, as defined in Generic Bootstrapping Architecture, GBA.

9. The Application Function (30) node of claim 8, wherein the interface (55) is an interface between the NAF and the BSF, and/or
wherein the authentication challenge is an authentication vector generated by a Home Subscriber Server, HSS, (40).

10. The Application Function (30) node of claim 8 or 9, wherein the session keys are Bootstrapping Key Session, Ksb, useable for a specific Application Function (30), and/or
wherein the secret authentication credentials comprise a physical Subscriber Identity Module, SIM, an embedded SIM or a software SIM.

11. The Application Function (30) node of any one of claims 8-10, wherein the information included in the authentication challenge includes a Message Authentication Code, MAC, and Random number, RAND, and/or
wherein the secure communication link is a Transport Layer Security based on Pre-Shared Key ciphersuite, TLS-PSK, tunnel.

12. An Authentication Function (20) node for securing an interface (55) and a process for establishing a secure communication link towards an a first Application Function (30) located in an unsecure zone, the Authentication Function (20) node comprising a processing circuit (500) and a memory (510), said memory (510) containing instructions executable by said processing circuit (500) whereby said Authentication Function (20) node is operative to:
- receive (410) an authentication request message from the first Application Function (30);
- send (420) a request for an authentication vector to a Home Subscriber Server, HSS, (40) for an identifier provided in the authentication request message;
- receive (430) a response from the HSS (40) including the authentication vector;
- send (440) a response to the authentication request to the first Application Function (30) including an authentication challenge derived from the authentication vector;
- receive (450) a challenge response from the first Application Function (30);
- upon validating the challenge response, generate (460) a session key using information included in the authentication vector;
- send (470) a response indicating success to the first Application Function (30); and
- handshake (480) with the first Application Function (30) and establish the secure communication link using the session key, thereby securing the interface (55) between the first Application Function (30) and the Authentication Function (20),
wherein the first Application Function (30) is a Network Application Function, NAF, and the Authentication Function (20) node is a Bootstrapping Server Functionality, BSF, as defined in Generic Bootstrapping Architecture, GBA.

13. The Authentication Function (20) node of claim 12, wherein the interface (55) is an interface between the NAF and the BSF, and/or
wherein the session keys are Bootstrapping Key Session, Ksb, useable for a specific Application Function (30).

14. The Authentication Function (20) node of claim 12 or 13, wherein the information included in the authentication challenge includes a Message Authentication Code, MAC, and Random number, RAND, and/or
wherein the secure communication link is a Transport Layer Security based on Pre-Shared Key ciphersuite, TLS-PSK, tunnel.

15. A non-transitory computer media having stored thereon instructions for securing an interface and for securing a process for establishing a secure communication link between first Application Function (30) located in an unsecure zone and an a second Authentication Function (20), said instructions comprising instructions for executing the method of any one of claims 1-7.

## Patentansprüche

1. Verfahren zur Sicherung einer Schnittstelle (55) und zur Sicherung eines Prozesses zum Herstellen einer sicheren Kommunikationsverbindung zwischen einer ersten Anwendungsfunktion (30), die sich in einer unsicheren Zone befindet, und einer zweiten Authentifizierungsfunktion (20), umfassend, dass:
- die erste Anwendungsfunktion (30) eine Authentifizierungsanforderungsnachricht an die zweite Authentifizierungsfunktion (20) sendet (310) ;
- die erste Anwendungsfunktion (30) eine Antwort von der zweiten Authentifizierungsfunktion (20) auf die Authentifizierungsanforderung empfängt (320), die eine Authentifizierungsabfrage umfasst;
- die erste Anwendungsfunktion (30) eine Abfrageantwort an die zweite Authentifizierungsfunktion (20) sendet (330);
- die erste Anwendungsfunktion (30) bei Empfang einer Antwort mit einer Erfolgsangabe von der zweiten Authentifizierungsfunktion (20) einen Sitzungsschlüssel unter Verwendung von geheimen Authentifizierungs-Anmeldeinformationen und Informationen erzeugt (340), die in der Authentifizierungsabfrage umfasst sind; und
- die erste Anwendungsfunktion (30) Handshake (350) mit der zweiten Authentifizierungsfunktion (20) durchführt und die sichere Kommunikationsverbindung unter Verwendung des Sitzungsschlüssels herstellt, um dadurch die Schnittstelle (55) zwischen der ersten Anwendungsfunktion (30) und der zweiten Authentifizierungsfunktion (20) zu sichern,
wobei die erste Anwendungsfunktion (30) eine Netzwerkanwendungsfunktion, NAF, ist, und die zweite Authentifizierungsfunktion (20) eine Bootstrapping-Server-Funktionalität, BSF, wie in der generischen Bootstrapping-Architektur, GBA, definiert, ist.

2. Verfahren nach Anspruch 1, wobei die Schnittstelle (55) eine Schnittstelle zwischen der NAF und der BSF ist, und/oder
wobei die Authentifizierungsabfrage ein Authentifizierungsvektor ist, der von einem Heimat-Teilnehmerserver, HSS, (40) erzeugt wird.

3. Verfahren nach Anspruch 1 oder 2, wobei es sich bei den Sitzungsschlüsseln um eine Bootstrapping-Schlüsselsitzung, Ksb, handelt, die für eine spezifische Anwendungsfunktion (30) verwendet werden kann, und/oder
wobei die geheimen Authentifizierungs-Anmeldeinformationen ein physisches Teilnehmerkennungsmodul, SIM, ein eingebettetes SIM oder ein Software-SIM umfassen.

4. Verfahren nach einem der Ansprüche 1 bis 3, wobei die in der Authentifizierungsabfrage umfassten Informationen einen Nachrichtenauthentifizierungscode, MAC, und eine Zufallszahl, RAND, umfassen, und/oder
wobei die sichere Kommunikationsverbindung ein Tunnel mit Transportschichtsicherheit basierend auf einer Pre-Shared-Key-Chiffriersuite, TLS-PSK, ist.

5. Verfahren zur Sicherung einer Schnittstelle (55) und zur Sicherung eines Prozesses zum Herstellen einer sicheren Kommunikationsverbindung zwischen einer ersten Anwendungsfunktion (30), die sich in einer unsicheren Zone befindet, und einer zweiten Authentifizierungsfunktion (20), umfassend, dass:
- die zweite Authentifizierungsfunktion (20) eine Authentifizierungsanforderungsnachricht von der ersten Authentifizierungsfunktion (30) empfängt (410) ;
- die zweite Authentifizierungsfunktion (20) eine Anforderung eines Authentifizierungsvektors an einen Heimat-Teilnehmerserver, HSS, (40) für eine Kennung sendet (420), die in der Authentifizierungsanforderungsnachricht vorgesehen ist;
- die zweite Authentifizierungsfunktion (20) eine Antwort vom HSS (40) mit dem Authentifizierungsvektor empfängt (430);
- die zweite Authentifizierungsfunktion (20) eine Antwort auf die Authentifizierungsanforderung an die erste Anwendungsfunktion (30) sendet (440), die eine vom Authentifizierungsvektor abgeleitete Authentifizierungsabfrage umfasst;
- die zweite Authentifizierungsfunktion (20) eine Authentifizierungsantwort von der ersten Anwendungsfunktion (30) empfängt (450);
- die zweite Authentifizierungsfunktion (20) bei Validierung der Abfrageantwort einen Sitzungsschlüssel unter Verwendung von Informationen erzeugt (460), die im Authentifizierungsvektor umfasst sind;
- die zweite Authentifizierungsfunktion (20) eine Antwort mit einer Erfolgsangabe an die erste Anwendungsfunktion (30) sendet (470); und
- die zweite Authentifizierungsfunktion (20) Handshake (480) mit der ersten Anwendungsfunktion (30) durchführt und die sichere Kommunikationsverbindung unter Verwendung des Sitzungsschlüssels herstellt, um dadurch die Schnittstelle (55) zwischen der ersten Anwendungsfunktion (30) und der zweiten Authentifizierungsfunktion (20) zu sichern,
wobei die erste Anwendungsfunktion (30) eine Netzwerkanwendungsfunktion, NAF, ist, und die zweite Authentifizierungsfunktion (20) eine Bootstrapping-Server-Funktionalität, BSF, wie in der generischen Bootstrapping-Architektur, GBA, definiert, ist.

6. Verfahren nach Anspruch 5, wobei die Schnittstelle (55) eine Schnittstelle zwischen der NAF und der BSF ist, und/oder
wobei es sich bei den Sitzungsschlüsseln um eine Bootstrapping-Schlüsselsitzung, Ksb, handelt, die für eine spezifische Anwendungsfunktion (30) verwendet werden kann.

7. Verfahren nach einem der Ansprüche 5 oder 6, wobei die in der Authentifizierungsabfrage umfassten Informationen einen Nachrichtenauthentifizierungscode, MAC, und eine Zufallszahl, RAND, umfassen, und/oder wobei die sichere Kommunikationsverbindung ein Tunnel mit Transportschichtsicherheit basierend auf einer Pre-Shared-Key-Chiffriersuite, TLS-PSK, ist.

8. Knoten mit Anwendungsfunktion (30), der sich in einer unsicheren Zone befindet, zum Sichern einer Schnittstelle (55) und eines Prozesses zur Herstellung einer sicheren Kommunikationsverbindung mit einer zweiten Authentifizierungsfunktion (20), wobei der Knoten mit Anwendungsfunktion (30) eine Verarbeitungsschaltung (500) und einen Speicher (510) umfasst, und der Speicher (510) Anweisungen enthält, die von der Verarbeitungsschaltung (500) ausgeführt werden können, wodurch der Knoten mit Anwendungsfunktion (30) ausgelegt ist zum:
- Senden (310) einer Authentifizierungsanforderungsnachricht an die zweite Authentifizierungsfunktion (20);
- Empfangen (320) einer Antwort von der zweiten Authentifizierungsfunktion (20) auf die Authentifizierungsanforderung, die eine Authentifizierungsabfrage umfasst;
- Senden (330) einer Abfrageantwort an die zweite Authentifizierungsfunktion (20);
- Erzeugen (340) eines Sitzungsschlüssels unter Verwendung von geheimen Authentifizierungs-Anmeldeinformationen und Informationen, die in der Authentifizierungsabfrage umfasst sind, bei Empfang einer Antwort mit einer Erfolgsangabe von der zweiten Authentifizierungsfunktion (20); und
- Durchführen von Handshake (350) mit der zweiten Authentifizierungsfunktion (20) und Herstellen der sicheren Kommunikationsverbindung unter Verwendung des Sitzungsschlüssels, um dadurch die Schnittstelle (55) zwischen der Anwendungsfunktion (30) und der Authentifizierungsfunktion (20) zu sichern,
wobei der Knoten mit Anwendungsfunktion (30) eine Netzwerkanwendungsfunktion, NAF, ist, und die zweite Authentifizierungsfunktion (20) eine Bootstrapping-Server-Funktionalität, BSF, wie in der generischen Bootstrapping-Architektur, GBA, definiert, ist.

9. Knoten mit Anwendungsfunktion (30) nach Anspruch 8, wobei die Schnittstelle (55) eine Schnittstelle zwischen der NAF und der BSF ist, und/oder
wobei die Authentifizierungsabfrage ein Authentifizierungsvektor ist, der von einem Heimat-Teilnehmerserver, HSS, (40) erzeugt wird.

10. Knoten mit Anwendungsfunktion (30) nach Anspruch 8 oder 9, wobei es sich bei den Sitzungsschlüsseln um eine Bootstrapping-Schlüsselsitzung, Ksb, handelt, die für eine spezifische Anwendungsfunktion (30) verwendet werden kann, und/oder
wobei die geheimen Authentifizierungs-Anmeldeinformationen ein physisches Teilnehmerkennungsmodul, SIM, ein eingebettetes SIM oder ein Software-SIM umfassen.

11. Knoten mit Anwendungsfunktion (30) nach einem der Ansprüche 8 bis 10, wobei die in der Authentifizierungsabfrage umfassten Informationen einen Nachrichtenauthentifizierungscode, MAC, und eine Zufallszahl, RAND, umfassen, und/oder
wobei die sichere Kommunikationsverbindung ein Tunnel mit Transportschichtsicherheit basierend auf einer Pre-Shared-Key-Chiffriersuite, TLS-PSK, ist.

12. Knoten mit Authentifizierungsfunktion (20) zum Sichern einer Schnittstelle (55) und eines Prozesses zur Herstellung einer sicheren Kommunikationsverbindung mit einer ersten Anwendungsfunktion (30), die sich in einer unsicheren Zone befindet, wobei der Knoten mit Authentifizierungsfunktion (20) eine Verarbeitungsschaltung (500) und einen Speicher (510) umfasst, und der Speicher (510) Anweisungen enthält, die von der Verarbeitungsschaltung (500) ausgeführt werden können, wodurch der Knoten mit Authentifizierungsfunktion (20) ausgelegt ist zum:
- Empfangen (410) einer Authentifizierungsanforderungsnachricht von der ersten Anwendungsfunktion (30);
- Senden (420) einer Anforderung eines Authentifizierungsvektors an einen Heimat-Teilnehmerserver, HSS, (40) für eine Kennung, die in der Authentifizierungsanforderungsnachricht vorgesehen ist;
- Empfangen (430) einer Antwort vom HSS (40) mit dem Authentifizierungsvektor;
- Senden (440) einer Antwort auf die Authentifizierungsanforderung an die erste Anwendungsfunktion (30), die eine vom Authentifizierungsvektor abgeleitete Authentifizierungsabfrage umfasst;
- Empfangen (450) einer Abfrageantwort von der ersten Anwendungsfunktion (30);
- Erzeugen (460) eines Sitzungsschlüssels unter Verwendung von Informationen, die im Authentifizierungsvektor umfasst sind, bei Validierung der Abfrageantwort;
- Senden (470) einer Antwort mit einer Erfolgsangabe an die erste Anwendungsfunktion (30); und
- Durchführen von Handshake (480) mit der ersten Anwendungsfunktion (30) und Herstellen der sicheren Kommunikationsverbindung unter Verwendung des Sitzungsschlüssels, um dadurch die Schnittstelle (55) zwischen der ersten Anwendungsfunktion (30) und der Authentifizierungsfunktion (20) zu sichern,
wobei die erste Anwendungsfunktion (30) eine Netzwerkanwendungsfunktion, NAF, ist, und der Knoten mit Authentifizierungsfunktion (20) eine Bootstrapping-Server-Funktionalität, BSF, wie in der generischen Bootstrapping-Architektur, GBA, definiert,
ist.

13. Knoten mit Authentifizierungsfunktion (20) nach Anspruch 12, wobei die Schnittstelle (55) eine Schnittstelle zwischen der NAF und der BSF ist, und/oder
wobei es sich bei den Sitzungsschlüsseln um eine Bootstrapping-Schlüsselsitzung, Ksb, handelt, die für eine spezifische Anwendungsfunktion (30) verwendet werden kann.

14. Knoten mit Authentifizierungsfunktion (20) nach Anspruch 12 oder 13, wobei die in der Authentifizierungsabfrage umfassten Informationen einen Nachrichtenauthentifizierungscode, MAC, und eine Zufallszahl, RAND, umfassen, und/oder
wobei die sichere Kommunikationsverbindung ein Tunnel mit Transportschichtsicherheit basierend auf einer Pre-Shared-Key-Chiffriersuite, TLS-PSK, ist.

15. Nicht-transitorisches Computermedium mit darauf gespeicherten Anweisungen zum Sichern einer Schnittstelle und zum Sichern eines Prozesses zur Herstellung einer sicheren Kommunikationsverbindung zwischen einer ersten Anwendungsfunktion (30), die sich in einer unsicheren Zone befindet, und einer zweiten Authentifizierungsfunktion (20), wobei die Anweisungen Anweisungen zum Ausführen des Verfahrens nach einem der Ansprüche 1 bis 7 umfassen.

## Revendications

1. Procédé de sécurisation d'une interface (55) et de sécurisation d'un processus d'établissement d'une liaison de communication sécurisée entre une première fonction d'application (30) située dans une zone non sécurisée et une deuxième fonction d'authentification (20), comprenant :
- l'envoi (310), par la première fonction d'application (30), d'un message de demande d'authentification à la deuxième fonction d'authentification (20) ;
- la réception (320), par la première fonction d'application (30), d'une réponse à la demande d'authentification en provenance de la deuxième fonction d'authentification (20) incluant un défi d'authentification ;
- l'envoi (330), par la première fonction d'application (30), d'une réponse au défi à la deuxième fonction d'authentification (20) ;
- à la réception d'une réponse indiquant une réussite en provenance de la deuxième fonction d'authentification (20), la génération (340), par la première fonction d'application (30), d'une clé de session en utilisant des justificatifs d'authentification secrets et des informations incluses dans le défi d'authentification ; et
- l'établissement d'une liaison (350), par la première fonction d'application (30), avec la deuxième fonction d'authentification (20) et l'établissement de la liaison de communication sécurisée en utilisant la clé de session, en sécurisant de ce fait l'interface (55) entre la première fonction d'application (30) et la deuxième fonction d'authentification (20),
dans lequel la première fonction d'application (30) est une fonction d'application de réseau, NAF, et la deuxième fonction d'authentification (20) est une fonctionnalité de serveur d'amorçage, BSF, telle que définie dans une architecture d'amorçage générique, GBA.

2. Procédé selon la revendication 1, dans lequel l'interface (55) est une interface entre la NAF et la BSF, et/ou
dans lequel le défi d'authentification est un vecteur d'authentification généré par un serveur d'abonné de rattachement, HSS, (40).

3. Procédé selon la revendication 1 ou 2, dans lequel les clés de session sont des clés de session d'amorçage, Ksb, utilisables pour une fonction d'application (30) spécifique, et/ou
dans lequel les justificatifs d'authentification secrets comprennent un module d'identité d'abonné, SIM, physique, un SIM intégré ou un SIM logiciel.

4. Procédé selon l'une quelconque des revendications 1 à 3, dans lequel les informations incluses dans le défi d'authentification incluent un code d'authentification de message, MAC, et un nombre aléatoire, RAND, et/ou
dans lequel la liaison de communication sécurisée est un tunnel de sécurité de couche de transport basée sur suite de chiffrement de clés préalablement partagées, TLS-PSK.

5. Procédé de sécurisation d'une interface (55) et de sécurisation d'un processus d'établissement d'une liaison de communication sécurisée entre une première fonction d'application (30) située dans une zone non sécurisée et une deuxième fonction d'authentification (20), comprenant :
- la réception (410), par la deuxième fonction d'authentification (20), d'un message de demande d'authentification en provenance de la première fonction d'application (30) ;
- l'envoi (420), par la deuxième fonction d'authentification (20), d'une demande d'un vecteur d'authentification à un serveur d'abonné de rattachement, HSS, (40) pour un identifiant fourni dans le message de demande d'authentification ;
- la réception (430), par la deuxième fonction d'authentification (20), d'une réponse en provenance du HSS (40) incluant le vecteur d'authentification ;
- l'envoi (440), par la deuxième fonction d'authentification (20), d'une réponse à la demande d'authentification à la première fonction d'application (30) incluant un défi d'authentification dérivé du vecteur d'authentification ;
- la réception (450), par la deuxième fonction d'authentification (20), d'une réponse au défi en provenance de la première fonction d'application (30) ;
- à la validation de la réponse au défi, la génération (460), par la deuxième fonction d'authentification (20), d'une clé de session en utilisant des informations incluses dans le vecteur d'authentification ;
- l'envoi (470), par la deuxième fonction d'authentification (20), d'une réponse indiquant une réussite à la première fonction d'application (30) ; et
- l'établissement d'une liaison (480), par la deuxième fonction d'authentification (20), avec la première fonction d'application (30) et l'établissement de la liaison de communication sécurisée en utilisant la clé de session, en sécurisant de ce fait l'interface (55) entre la première fonction d'application (30) et la deuxième fonction d'authentification (20),
dans lequel la première fonction d'application (30) est une fonction d'application de réseau, NAF, et la deuxième fonction d'authentification (20) est une fonctionnalité de serveur d'amorçage, BSF, telle que définie dans une architecture d'amorçage générique,
GBA.

6. Procédé selon la revendication 5, dans lequel l'interface (55) est une interface entre la NAF et la BSF, et/ou
dans lequel les clés de session sont des clés de session d'amorçage, Ksb, utilisables pour une fonction d'application (30) spécifique.

7. Procédé selon la revendication 5 ou 6, dans lequel les informations incluses dans le défi d'authentification incluent un code d'authentification de message, MAC, et un nombre aléatoire, RAND, et/ou
dans lequel la liaison de communication sécurisée est un tunnel de sécurité de couche de transport basée sur suite de chiffrement de clés préalablement partagées, TLS-PSK.

8. Nœud de fonction d'application (30) situé dans une zone non sécurisée pour sécuriser une interface (55) et un processus d'établissement d'une liaison de communication sécurisée avec une deuxième fonction d'authentification (20), le nœud de fonction d'application (30) comprenant un circuit de traitement (500) et une mémoire (510), ladite mémoire (510) contenant des instructions exécutables par ledit circuit de traitement (500) de telle manière que ledit nœud de fonction d'application (30) soit opérationnel pour :
- l'envoi (310) d'un message de demande d'authentification à la deuxième fonction d'authentification (20) ;
- la réception (320) d'une réponse à la demande d'authentification en provenance de la deuxième fonction d'authentification (20) incluant un défi d'authentification ;
- l'envoi (330) d'une réponse au défi à la deuxième fonction d'authentification (20) ;
- à la réception d'une réponse indiquant une réussite en provenance de la deuxième fonction d'authentification (20), la génération (340) d'une clé de session en utilisant des justificatifs d'authentification secrets et des informations incluses dans le défi d'authentification ; et
- l'établissement d'une liaison (350) avec la deuxième fonction d'authentification (20) et l'établissement de la liaison de communication sécurisée en utilisant la clé de session, en sécurisant de ce fait l'interface (55) entre la première fonction d'application (30) et la fonction d'authentification (20),
dans lequel le nœud de fonction d'application (30) est une fonction d'application de réseau, NAF, et la deuxième fonction d'authentification (20) est une fonctionnalité de serveur d'amorçage, BSF, telle que définie dans une architecture d'amorçage générique, GBA.

9. Nœud de fonction d'application (30) selon la revendication 8, dans lequel l'interface (55) est une interface entre la NAF et la BSF, et/ou
dans lequel le défi d'authentification est un vecteur d'authentification généré par un serveur d'abonné de rattachement, HSS, (40).

10. Nœud de fonction d'application (30) selon la revendication 8 ou 9, dans lequel les clés de session sont des clés de session d'amorçage, Ksb, utilisables pour une fonction d'application (30) spécifique, et/ou
dans lequel les justificatifs d'authentification secrets comprennent un module d'identité d'abonné, SIM, physique, un SIM intégré ou un SIM logiciel.

11. Nœud de fonction d'application (30) selon l'une quelconque des revendications 8 à 10, dans lequel les informations incluses dans le défi d'authentification incluent un code d'authentification de message, MAC, et un nombre aléatoire, RAND, et/ou
dans lequel la liaison de communication sécurisée est un tunnel de sécurité de couche de transport basée sur suite de chiffrement de clés préalablement partagées, TLS-PSK.

12. Nœud de fonction d'authentification (20) pour sécuriser une interface (55) et un processus d'établissement d'une liaison de communication sécurisée avec une première fonction d'application (30) située dans une zone non sécurisée, le nœud de fonction d'authentification (20) comprenant un circuit de traitement (500) et une mémoire (510), ladite mémoire (510) contenant des instructions exécutables par ledit circuit de traitement (500) de telle manière que ledit nœud de fonction d'authentification (20) soit opérationnel pour :
- la réception (410) d'un message de demande d'authentification en provenance de la première fonction d'application (30) ;
- l'envoi (420) d'une demande d'un vecteur d'authentification à un serveur d'abonné de rattachement, HSS, (40) pour un identifiant fourni dans le message de demande d'authentification ;
- la réception (430) d'une réponse en provenance du HSS (40) incluant le vecteur d'authentification ;
- l'envoi (440) d'une réponse à la demande d'authentification à la première fonction d'application (30) incluant un défi d'authentification dérivé du vecteur d'authentification ;
- la réception (450) d'une réponse au défi en provenance de la première fonction d'application (30) ;
- à la validation de la réponse au défi, la génération (460) d'une clé de session en utilisant des informations incluses dans le vecteur d'authentification ;
- l'envoi (470) d'une réponse indiquant une réussite à la première fonction d'application (30) ; et
- l'établissement d'une liaison (480) avec la première fonction d'application (30) et l'établissement de la liaison de communication sécurisée en utilisant la clé de session, en sécurisant de ce fait l'interface (55) entre la première fonction d'application (30) et la fonction d'authentification (20),
dans lequel la première fonction d'application (30) est une fonction d'application de réseau, NAF, et le nœud de fonction d'authentification (20) est une fonctionnalité de serveur d'amorçage, BSF, telle que définie dans une architecture d'amorçage générique, GBA.

13. Nœud de fonction d'authentification (20) selon la revendication 12, dans lequel l'interface (55) est une interface entre la NAF et la BSF, et/ou
dans lequel les clés de session sont des clés de session d'amorçage, Ksb, utilisables pour une fonction d'application (30) spécifique.

14. Nœud de fonction d'authentification (20) selon la revendication 12 ou 13, dans lequel les informations incluses dans le défi d'authentification incluent un code d'authentification de message, MAC, et un nombre aléatoire, RAND, et/ou
dans lequel la liaison de communication sécurisée est un tunnel de sécurité de couche de transport basée sur suite de chiffrement de clés préalablement partagées, TLS-PSK.

15. Support informatique non transitoire sur lequel sont stockées des instructions pour sécuriser une interface et pour sécuriser un processus d'établissement d'une liaison de communication sécurisée entre une première fonction d'application (30) située dans une zone non sécurisée et une deuxième fonction d'authentification (20), lesdites instructions comprenant des instructions pour exécuter le procédé selon l'une quelconque des revendications 1 à 7.
